# EUROPEAN PATENT APPLICATION

(11) **EP 4 464 154 A1**
(43) Date of publication of application: **20.11.2024**
(21) Application number: 22918557.4
(22) Date of filing: 09.12.2022
(51) Int. Cl.: A01K 61/00, A01K 61/10, A01K 61/60, A01K 63/00, A01K 63/04

(54) **OXYGENATION SYSTEM AND METHOD FOR AQUACULTURE**

(30) Priority: 10.01.2022 CL 20220056
(71) Applicant: Oxzo S.A., Puerto Montt, 5501619 (CL)
(72) Inventor: MARCUS DEL CAMPO, John Robert, Puerto Montt (CL); HUSAK SOTOMAYOR, Thomas Wenzel, Puerto Montt (CL)
(74) Representative: Clarke, Modet y Cía., S.L.
(86) International application number: PCT/IB2022/062013
(87) International publication number: WO 2023/131836

(57) **Abstract**

The invention relates to an oxygenation system and method. The system comprises: a plurality of fluid outlets, each fluid outlet being associated with a corresponding valve, which selectively controls the passage of fluid to the fluid outlet; at least one distribution line operatively connected to at least one of the fluid outlets; a fluid source operatively connected to the at least one fluid distribution line; and processing means operatively connected to the plurality of fluid outlets and configured to: a) acquire at least one measurement of water current speed and direction; and b) control, in real time, the opening of the corresponding valves in response to oxygen requirements and on the basis of the at least one acquired measurement of water current speed and direction.

## Description

### FIELD OF THE INVENTION

The present technology relates to the aquaculture industry, specifically in technologies associated with oxygenation systems and methods and in particular provides an oxygenation system and method for aquaculture in response to oxygen requirements and using currents present in a body of water.

### BACKGROUND OF THE INVENTION

In the field of aquaculture, systems and methods to provide oxygen are becoming more and more common. The provision of oxygen has beneficial effects both for the species under cultivation and for the environment in which an aquaculture facility is located.

In the state of the art, some technologies are known to control the oxygen supply in aquaculture facilities. For example, US 2017/215391 discloses a control system for an aquaculture tank, wherein the system comprises a plurality of discharge conduits arranged in the tank. The discharge lines carry a fluid and a gas and the discharge of the fluid and gas into the tank allows a current to be maintained inside the tank. However, the technology disclosed herein does not allow control of oxygen supply in response to a water current, as the technical problem addressed is the oxygenation of tanks, which are on land and not submerged in a body of water.

CL 202100448 discloses a system and method for injecting controlled flows of gases, such as oxygen and air, into pools and fish culture facilities. The solution proposed there allows measuring and controlling the flow of oxygen provided in the aquaculture system. However, the technology described therein only allows control of oxygenation in response to an oxygen measurement in the aquaculture system, but does not allow control in response to a water flow.

CL 202100912 discloses a method for injecting nanobubbles into the bottom layer of a water column. Although this document discloses the consideration of the currents present in the water body, the technology described therein does not allow a dynamic control of the oxygenation in an aquaculture system, since according to what is disclosed therein, the arrangement and operation of the diffusers are fixed and are established after a mathematical modeling of the water body, as well as its currents, which is performed prior to the installation of the diffusers, but whose operation does not respond to dynamic changes of such currents.

Additionally, none of the prior art documents disclose that the number of fluid outlets depends on or has any relationship to the number of culture media present in the aquaculture facility, so that oxygen supply presents a lower efficiency, particularly in the presence of currents present in the water body.

Consequently, a system and method is required to overcome the shortcomings of the state of the art.

### SUMMARY OF THE INVENTION

The present invention provides an oxygenation system for aquaculture comprising a plurality of culture media submerged in a body of water, which allows a dynamic control of oxygen supply in response to oxygen requirements of said culture media, using streams present in said body of water by means of a plurality of fluid outlets characterized in that the system comprises: a plurality of outlets of an oxygen-containing fluid, wherein each culture medium has associated with it at least two corresponding fluid outlets, wherein each fluid outlet of the plurality has associated with it a corresponding control valve, which selectively controls the passage of fluid to the fluid outlet; at least one fluid distribution line operatively connected to at least one of the at least one fluid outlet of the plurality via its corresponding control valve; a fluid source operatively connected to the at least one fluid distribution line; and processing means operatively connected to the plurality of fluid outlets, wherein the processing means are configured to: (a) acquiring at least one measurement of water current velocity and direction in the body of water; and (b) controlling the opening of corresponding control valves associated with the at least two fluid outlets associated with each culture medium, said control being in response to the oxygen requirements of said culture medium; wherein the processing means are configured to control the opening of the corresponding control valves based, additionally, on the at least one acquired water current velocity and direction measurement; and wherein the processing means are configured to control the opening of the corresponding control valves in real time.

In a second object of the present invention there is provided a method of oxygenation for an aquaculture system comprising a plurality of culture media submerged in a body of water, which allows dynamic control of oxygen supply in response to oxygen requirements of said culture media, using streams present in said body of water by means of a plurality of fluid outlets, the method comprising: providing an oxygenation system comprising: a plurality of outlets of an oxygen-containing fluid, wherein each culture medium has associated with it at least two corresponding fluid outlets, wherein each fluid outlet of the plurality has associated with it a corresponding control valve , which selectively controls the passage of fluid to the outlet; at least one fluid distribution line operatively connected to at least one of the at least one fluid outlet of the plurality via its corresponding control valve; a fluid source operatively connected to the at least one fluid distribution line; and processing means operatively connected to the plurality of fluid outlets, wherein the method further comprises: acquiring at least one water current velocity and direction measurement in the body of water by the processing means; controlling, by the processing means, the opening of corresponding control valves associated with the at least two fluid outlets associated with each culture medium, said control being in response to the oxygen requirements of said culture medium; and controlling, by means of the processing means, the opening of the corresponding control valves based, additionally, on the at least one acquired water flow velocity and direction measurement; wherein the step of controlling the opening of the corresponding control valves is performed in real time.

### BRIEF DESCRIPTION OF THE DRAWINGS

Figure 1 schematically illustrates a first embodiment of the system that is the subject of the present invention.
Figure 2 schematically illustrates a second embodiment of the system that is the subject of the present invention.
Figure 3A and 3B schematically illustrate a first application case of the system that is the subject of the present invention.
Figure 4A and 4B schematically illustrate a second application case of the system that is the subject of the present invention.
Figure 5A and 5B schematically illustrate a third application case of the system that is the subject of the present invention.
Figure 6 schematically illustrates a first example configuration of a culture medium forming part of the system that is the subject of the present invention.
Figure 7 schematically illustrates a second example configuration of a culture medium forming part of the system that is the subject of the present invention.
Figure 8 schematically illustrates a third embodiment of the system that is the subject of the present invention.
Figure 9 illustrates an example embodiment of an instrumentation diagram forming part of the system that is the subject of the present invention.
Figure 10 illustrates an example embodiment of a control diagram used in the system that is the subject of the present invention.

### DETAILED DESCRIPTION OF THE INVENTION

Then, the present invention will now be described in a detailed manner with reference to the Figures accompanying this application.

The present invention provides an oxygenation system (1) for aquaculture comprising a plurality of culture media (2a, 2b, 2c) submerged in a body of water, which allows a dynamic control of the oxygen supply in response to oxygen requirements of said culture media (2a, 2b, 2c), using currents present in said body of water by means of a plurality of fluid outlets (3aa, 3ab, 3ac, 3ad, 3ba, 3bb, 3ca, 3cb), wherein the system (1) comprises:
a plurality of outlets (3aa, 3ab, 3ac, 3ad, 3ba, 3bb, 3ca, 3cb) of an oxygen-containing fluid, wherein each culture medium (2a, 2b, 2c) has associated with it at least two corresponding fluid outlets (3aa, 3ab, 3ac, 3ad, 3ba, 3bb, 3ca, 3cb), wherein each fluid outlet (3aa, 3ab, 3ac, 3ad, 3ba, 3bb, 3ca, 3cb) of the plurality has associated with it a corresponding control valve (4aa, 4ab, 4ba, 4bb, 4ca, 4cb), which selectively controls the passage of fluid to the fluid outlet (3aa, 3ab, 3ac, 3ad, 3ba, 3bb, 3ca, 3ca, 3cb);
at least one fluid distribution line (5, 5a, 5aa, 5aa, 5ab, 5ac, 5ad, 5b, 5c) operatively connected to at least one of the fluid outlets (3aa, 3ab, 3ac, 3ad, 3ba, 3bb, 3ca, 3cb) of the plurality by means of its corresponding control valve (4aa, 4ab, 4ba, 4bb, 4ca, 4cb);
a fluid source (6) operatively connected to the at least one fluid distribution line (5, 5a, 5aa, 5ab, 5ac, 5ad, 5b, 5c); and
processing means (8) operatively connected operatively with the plurality of fluid outlets (3aa, 3ab, 3ac, 3ad, 3ba, 3bb, 3ca, 3cb), wherein the processing means (8) are configured to:
   a) acquire at least one measurement of water velocity and current direction in the water body; and
   b) controlling the opening of the corresponding control valves (4aa, 4ab, 4ba, 4bb, 4ca, 4cb) associated with the at least two fluid outlets (3aa, 3ab, 3ac, 3ad, 3ba, 3bb, 3ca, 3cb) associated with each culture medium (2a, 2b, 2c), said control being made in response to the oxygen requirements of said culture medium (2a, 2b, 2c);
wherein the processing means (8) are configured to control the opening of the corresponding control valves (4aa, 4ab, 4ba, 4bb, 4ca, 4cb) based, additionally, on the at least one received water flow velocity and direction measurement; and
wherein the processing means (8) are configured to control the opening of the corresponding control valves (4aa, 4ab, 4ba, 4bb, 4ca, 4cb) in real time.

In the context of the present invention, the expression "at least one" should be understood to mean one or more of the elements referred to. The number of elements does not limit the scope of the present invention and will depend on the specific application of the system (1) which is the subject of the present invention. Furthermore, in case more than one element is provided, said referred elements may or may not be identical to each other without limiting the scope of the present invention.

In the context of the present invention, the term plurality is to be understood as meaning two or more of the elements referred to. The number of elements forming part of said plurality does not limit the scope of the present invention and will depend on the specific application of the system (1) which is the subject of the present invention. Furthermore, the elements forming part of the plurality may or may not be identical to each other without limiting the scope of the present invention.

In the context of the present invention, without limiting the scope of the present invention, a body of water will be understood as an expanse of water that is found by the earth's surface and whose area and/or volume is greater than a certain threshold. For example and without limiting the scope of the present invention, it will be understood that said body of water possesses an area greater than 10,000 square meters, more preferably greater than 500,000 square meters and even more preferably greater than 1 square kilometer, or a volume greater than 100,000 cubic meters, more preferably greater than 5,000,000 cubic meters and even more preferably greater than 1 cubic kilometer. Examples of water bodies may include, but are not limited to, parts or all of lakes, lagoons, bays, seas, oceans, rivers, estuaries, straits or gulfs. Commonly, bodies of water have currents within them that promote exchanges of both temperature and matter within the body of water.

In the context of the present invention, without limiting the scope thereof, culture media (2a, 2b, 2c) will be understood as a closed or semi-closed space that allows the cultivation of aquatic species, which may be plant, animal or otherwise. Examples of culture media (2a, 2b, 2c) can be, but are not limited to, cages, lanterns or hangers. Said culture media (2a, 2b, 2c) may be presented as independent elements or as subdivisions of a larger element without limiting the scope of the present invention. In an exemplary embodiment, without limiting the scope thereof, said culture media (2a, 2b, 2c) may be fish culture cages and obtained by subdividing a culture pond. The shape, materials and dimensions with which said culture media (2a, 2b, 2c) are manufactured do not limit the scope of the present invention and may depend, for example and without limiting the scope of the present invention, on the specific type of culture media (2a, 2b, 2c), on the body of water in which they are located or on the species under culture.

In the context of the present invention, without limiting the scope thereof, it will be understood that the oxygen requirements of the culture media (2a, 2b, 2c) may comprise, without being limited to these, biological requirements of the species under culture, operating parameters of the culture media (2a, 2b, 2c) or normative or regulatory requirements of an authority, as well as a combination thereof. Such oxygen requirements may be measured in any suitable unit of measurement, such as, for example and without limiting the scope of the present invention, kilograms of oxygen per cubic meter of water, kilograms of oxygen per square meter of water surface, kilograms of oxygen per individual, kilograms of oxygen per hour, or a combination thereof.

The manner in which the processing means (8) determine or obtain said oxygen requirements does not limit the scope of the present invention. For example, and without limiting the scope of the present invention, such oxygen requirements may be previously stored in a memory operatively connected operatively with the processing means (8), may be indicated by a user, either locally via a user interface, or remotely via a suitable remote connection, or may be stored remotely and read by the processing means (8). However, in other preferred embodiments, the processing means (8) may be configured to determine the oxygen requirement, for example, by counting the species under culture, by optical inspection of the culture media (2a, 2b, 2c), by a determination of the area and/or volume of the water body, as well as a combination thereof. In the latter preferred embodiments, without limiting the scope of the present invention, the processing means (8) may be further configured to estimate or calculate the oxygen requirement from said counting, said inspection or said determination.

The manner in which the processing means (8) acquire the at least one measurement of water current velocity and direction does not limit the scope of the present invention. In a preferred embodiment, without limiting the scope of the present invention, said processing means (8) can acquire said at least one measurement directly from a suitable measuring instrument, for example, at least one current meter (7) operatively connected with the processing means (8) and positioned within a vicinity of the culture media (2a, 2b, 2c). However, in other preferred embodiments, without limiting the scope of the present invention, said at least one measurement may be stored in a memory operatively connected with the processing means (8) and the processing means (8) may access said at least one measurement by reading said memory. In other preferred embodiments, without limiting the scope of the present invention, the at least one measurement may be indicated by a user, either locally via a user interface, or remotely via a suitable remote connection.

In the context of the present invention, without limiting the scope thereof, it will be understood as dynamic control the control in real time or in short time intervals of a particular variable, in the case of the present invention of the oxygen supply, by means of the opening and/or closing of the control valves (4aa, 4ab, 4ba, 4bb, 4ca, 4cb). In a preferred embodiment, it will be understood that the control is performed in real time if the time difference between the acquisition of a current measurement and the actual control of the opening and/or closing of the control valves (4aa, 4ab, 4ba, 4bb, 4ca, 4cb) is less than 5 seconds, more preferably less than 1 second and even more preferably less than 100 ms. Moreover, in a preferred embodiment, it will be understood that the control is performed in short time intervals if the time difference between the acquisition of a current measurement and the actual control of the opening and/or closing of the control valves (4aa, 4ab, 4ba, 4bb, 4ca, 4cb) is less than 10 minutes, more preferably less than 1 minute and even more preferably less than 10 seconds.

In the context of the present invention, without limiting the scope thereof, neighborhood will be understood as the area comprised within a radius around a specific point or region. The magnitude of said radius does not limit the scope of the present invention and may depend, for example, on the dimensions of the aquaculture system (1), on the area occupied by the plurality of culture means (2a, 2b, 2c), on the nature and dimensions of the body of water, as well as on combinations thereof. It is clear that the area occupied by the culture media (2a, 2b, 2c) is within any vicinity that a person ordinarily conversant with the subject can define.

In the context of the present invention, without limiting the scope thereof, an oxygen-containing fluid will be understood as a liquid or gas whose composition comprises molecular oxygen (O₂), either in solution, dispersion or mixture. The proportion of molecular oxygen present in said fluid does not limit the scope of the present invention and may be, for example, greater than about 10% by weight, more preferably greater than about 30% by weight and even more preferably greater than about 50% by weight. For example, and without limiting the scope of the present invention, said oxygen-containing fluid may be selected from the group consisting of gaseous oxygen, air, water with dissolved oxygen, water with dissolved air, oxygen-enriched water, air-enriched water, as well as a combination thereof.

The system that is the subject matter of the present invention comprises a plurality of outlets (3aa, 3ab, 3ac, 3ad, 3ba, 3bb, 3ca, 3cb) of an oxygen-containing fluid. Said fluid outlets (3aa, 3ab, 3ac, 3ad, 3ba, 3bb, 3ca, 3cb) may comprise one or more devices allowing injection or diffusion of the oxygen-containing fluid into the water body, particularly into the culture medium (2a, 2b, 2c) to which said fluid outlet (3aa, 3ab, 3ac, 3ad, 3ba, 3bb, 3ca, 3cb) is associated. The shape, dimensions and materials of said fluid outlets (3aa, 3ab, 3ac, 3ad, 3ba, 3bb, 3ca, 3cb) do not limit the scope of the present invention and may depend, for example, on the nature of the oxygen-containing fluid, on the oxygen requirements of the culture medium (2a, 2b, 2c), on the periodicity with which the opening and closing of the control valves (4aa, 4ab, 4ba, 4bb, 4ac, 4ab) is controlled, as well as a combination thereof. In a preferred embodiment, each of said fluid outlets (3aa, 3ab, 3ac, 3ad, 3ba, 3bb, 3ca, 3cb) may be selected from the group consisting of diffusers, eductors, injectors, sprinklers, as well as a combination thereof.

Each culture medium (2a, 2b, 2c) has at least two corresponding fluid outlets (3aa, 3ab, 3ac, 3ad, 3ba, 3bb, 3ca, 3cb) associated with it. In the context of the present invention, without limiting the scope thereof, it will be understood that a fluid outlet (3aa, 3ab, 3ac, 3ad, 3ba, 3bb, 3ca, 3cb) is associated with a corresponding culture medium (2a, 2b, 2c) when said fluid outlet (3aa, 3ab, 3ac, 3ad, 3ba, 3bb, 3ca, 3cb) is arranged, positioned and/or configured to provide oxygen-containing fluid to said culture medium (2a, 2b, 2c). The number of fluid outlets (3aa, 3ab, 3ac, 3ad, 3ba, 3bb, 3ca, 3cb) associated with each culture medium (2a, 2b, 2c) does not limit the scope of the present invention, as long as they are at least two. Additionally, different culture media (2a, 2b, 2c) in a same system (1) may have identical or different number of fluid outlets (3aa, 3ab, 3ac, 3ad, 3ba, 3bb, 3ca, 3cb) associated without limiting the scope of the present invention. In a preferred embodiment, without limiting the scope of the present invention, each culture medium (2a, 2b, 2c) may have between 2 and 6 corresponding fluid outlets (3aa, 3ab, 3ac, 3ad, 3ba, 3bb, 3ca, 3cb) associated with it.

Each fluid outlet (3aa, 3ab, 3ac, 3ad, 3ba, 3bb, 3ca, 3cb) of the plurality has associated with it a corresponding control valve (4aa, 4ab, 4ba, 4bb, 4ca, 4cb), which selectively controls the passage of fluid to the fluid outlet (3aa, 3ab, 3ac, 3ad, 3ba, 3bb, 3ca, 3cb). The nature of the corresponding control valve (4aa, 4ab, 4ba, 4bb, 4ca, 4cb) does not limit the scope of the present invention and may depend, for example, on the nature of the oxygen-containing fluid, on the oxygen requirements of the culture media (2a, 2b, 2c), on the periodicity with which the opening and/or closing of said control valves (4aa, 4ab, 4ba, 4bb, 4ca, 4cb) is controlled, as well as on a combination thereof. In a preferred embodiment, said control valves (4aa, 4ab, 4ba, 4bb, 4ca, 4cb) may be regulating valves, wherein the opening may acquire at least one intermediate position between a fully open position and a fully closed position. In another preferred embodiment, said control valves (4aa, 4ab, 4ba, 4bb, 4ca, 4cb) may be proportional valves, wherein the opening can be controlled substantially continuously between a fully open position and a fully closed position. In another preferred embodiment, said control valves (4aa, 4ab, 4ba, 4bb, 4ca, 4cb) may be on/off valves, commonly referred to as on/off, in which the opening is controlled in a substantially discrete manner between a fully open position and a fully closed position. In other preferred embodiments, the system (1) may comprise a combination of regulating valves, proportional valves and on/off valves.

The system (1) which is the subject of the present invention additionally comprises at least one fluid distribution line (5, 5a, 5aa, 5aa, 5ab, 5ac, 5ad, 5b, 5c) operatively connected to at least one of the fluid outlets (3aa, 3ab, 3ac, 3ad, 3ba, 3bb, 3ca, 3cb) of the plurality by means of its corresponding control valve (4aa, 4ab, 4ba, 4bb, 4ca, 4cb). In the context of the present invention, without limiting the scope thereof, it will be understood that said at least one fluid distribution line (5, 5a, 5aa, 5aa, 5ab, 5ac, 5ad, 5b, 5c) is operatively connected with a fluid outlet (3aa, 3ab, 3ac, 3ad, 3ba, 3ba, 3bb, 3ca, 3cb) if said fluid distribution line (5, 5a, 5aa, 5aa, 5ab, 5ac, 5ad, 5b, 5c) allows oxygen-containing fluid to be distributed from the fluid source (6) to said fluid outlet (3aa, 3ab, 3ac, 3ad, 3ba, 3bb, 3ca, 3cb).

The shape, length, dimensions and materials of said at least one fluid distribution line (5, 5a, 5aa, 5ab, 5ac, 5ad, 5b, 5c) do not limit the scope of the present invention. For example, and without limiting the scope of the present invention, said at least one fluid distribution line (5, 5a, 5aa, 5ab, 5ac, 5ad, 5b, 5c) can be made of a thermoplastic material which is selected from the group consisting of high density polyethylene (HDPE), polypropylene (PP), polyethylene terephthalate (PET), polyvinyl chloride (PVC), rubber, steel, stainless steel, copper, as well as a combination thereof. Additionally, the at least one fluid distribution line (5, 5a, 5aa, 5ab, 5ac, 5ad, 5b, 5c) may be designed as a single section connecting the fluid source (6) with the corresponding control valve (4aa, 4ab, 4ba, 4bb, 4ca, 4cb), or as a plurality of sections which together make up said fluid distribution line (5, 5a, 5aa, 5ab, 5ac, 5ad, 5b, 5c), without this limiting the scope of the present invention.

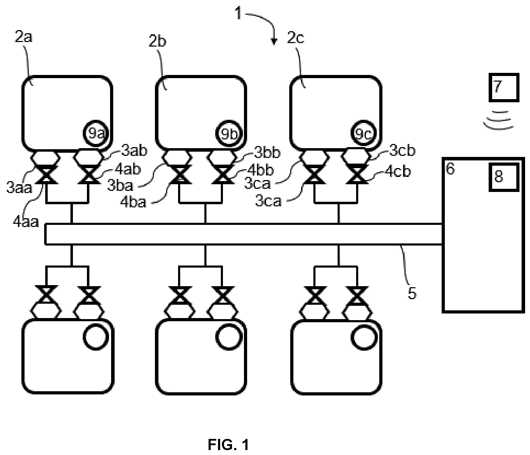

In a preferred embodiment, as schematically illustrated in Figure 1 and without limiting the scope of the present invention, the system (1) may comprise a main distribution line (5) of fluid operatively connected to each fluid outlet (3aa, 3ab, 3ba, 3bb, 3bb, 3ca, 3cb), wherein the main distribution line (5) has a ring arrangement. This configuration has the advantage of minimizing pressure drops along the main distribution line.

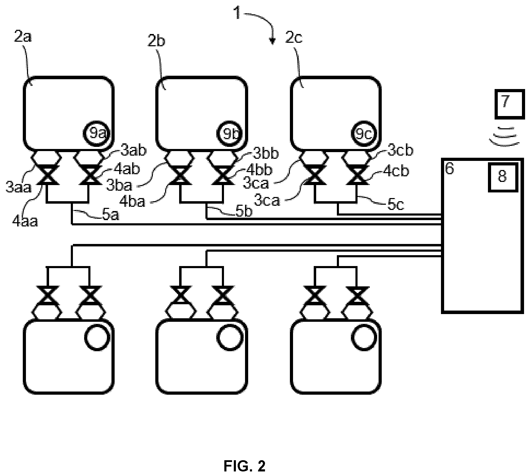

In another preferred embodiment, as schematically illustrated in Figure 2 and without limiting the scope of the present invention, the system (1) may comprise a plurality of distribution lines (5a, 5b, 5c), each distribution line (5a, 5b, 5c) of the plurality associated with a corresponding culture medium (2a, 2b, 2c) and operatively connected with the at least two fluid outlets (3aa, 3ab, 3ba, 3bb, 3ca, 3cb) associated with the corresponding culture medium (2a, 2b, 2c). This configuration has the advantage of allowing a more precise control of oxygenation in each culture medium (2a, 2b, 2c)

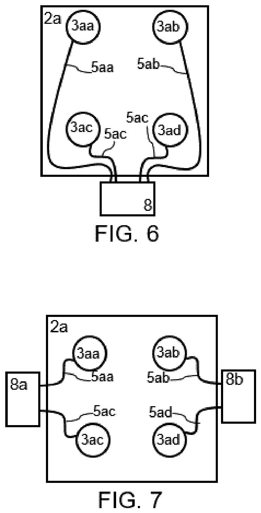

However, other configurations are also possible, as schematically illustrated in Figures 6 and 7. In the configuration schematically illustrated in Figures 6 and 7, the system comprises a plurality of fluid distribution lines (5aa, 5ab, 5ac, 5ad), each operatively connecting to a single corresponding fluid outlet (3aa, 3ab, 3ac, 3ad). In the embodiment schematically illustrated in Figure 7, further, the processing means (8) may comprise a plurality of processors (8a, 8b), each being configured to control the opening and closing of control valves (not illustrated in Figure 7) associated with a corresponding subset of the plurality of fluid outlets (3aa, 3ab, 3ac, 3ad).

The system (1) which is the subject of the present invention comprises a fluid source (6) operatively connected with the at least one fluid distribution line (5, 5a, 5aa, 5aa, 5ab, 5ac, 5ad, 5b, 5c), such that oxygen-containing fluid can move from the fluid source (6) into the at least one fluid distribution line (5, 5a, 5aa, 5ab, 5ac, 5ad, 5b, 5c) and ultimately into the plurality of fluid outlets (3aa, 3ab, 3ac, 3ad, 3ba, 3bb, 3ca, 3cb). Said fluid source (6) may be a fixed source or a mobile source without limiting the scope of the present invention. For example, and without limiting the scope of the present invention, said fluid source (6) may be or comprise a storage tank of the fluid containing oxygen, which may be stored liquefied or compressed in case it is a gas. However, in other preferred embodiments and without limiting the scope of the present invention, said fluid source (6) may be or comprise an oxygen-containing fluid generation system. For example, and without limiting the scope of the present invention, when said oxygen-containing fluid is air, said fluid source (6) may comprise an air compressor. In another example embodiment, when said oxygen-containing fluid is air-enriched or oxygen-enriched water, said fluid source (6) may be or comprise a water aeration or oxygenation system, for example, a Venturi-type installation.

The capacity of said fluid source (6) does not limit the scope of the present invention and may depend, for example, on the nature of the oxygen-containing fluid, the nature and number of culture media (2a, 2b, 2c), oxygen requirements, among other aspects.

In a preferred embodiment, without limiting the scope of the present invention, the system (1) may comprise at least one current meter (7) positioned within a vicinity of the plurality of culture media (2a, 2b, 2c) and operatively connected with the processing means (8). The extent of said vicinity does not limit the scope of the present invention and will depend on the extent of the culture media (2a, 2b, 2c), the extent of the body of water, or other operational aspects of the system (1) which is the subject of the present invention. In a preferred embodiment, without limiting the scope of the present invention, said vicinity may be defined by a radius of 100 m, more preferably of 50 m and even more preferably of 10 m around the area occupied by the plurality of culture media (2a, 2b, 2c). However, in other preferred embodiments, the at least one current meter (7) can be positioned between neighboring culture media (2a, 2b, 2c). In the context of the present invention, without limiting the scope thereof, it is to be understood that the at least one current meter (7) is operatively connected with the processing means (8) if the processing means (8) can receive current direction and current velocity measurements from said at least one current meter (7). In a more preferred embodiment, without limiting the scope of the present invention, said operating connection may additionally comprise that the processing means (8) are configured to control the operation of said at least one current meter (7).

In those preferred embodiments comprising, the at least one current meter (7) may be configured to obtain at least one measurement of water current velocity and direction in the body of water and to communicate such measurement to the processing means (8). In this way, the processing means (8) may rely on said at least one measurement of water flow velocity and direction to control in real time the opening and/or closing of the control valves (4aa, 4ab, 4ba, 4bb, 4ca, 4cb), as will be explained below. In a more preferred embodiment, without limiting the scope of the present invention, the at least one current meter (7) may be configured to obtain a plurality of measurements of direction and velocity of water currents, said plurality of measurements being obtained at a plurality of depths of said body of water, and to communicate said plurality of measurements to the processing means (8).

In other preferred embodiments, without limiting the scope of the present invention, the system (1) may comprise a plurality of current meters (7), each configured to obtain at least one corresponding water velocity and current direction measurement in the body of water and to communicate said corresponding measurement to the processing means (8). The manner in which said plurality of current meters are distributed in the body of water does not limit the scope of the present invention. For example, and without limiting the scope of the present invention, said plurality of current meters (7) may be distributed at different depths of the body of water, at different horizontal positions in the body of water or at a combination thereof.

The system (1) which is the subject of the present invention further comprises processing means (8) operatively connected with the plurality of fluid outlets (3aa, 3ab, 3ac, 3ad, 3ba, 3bb, 3ca, 3cb). In the context of the present invention, without limiting the scope thereof, it is to be understood that said operative connection between the processing means (8) and the plurality of fluid outlets (3aa, 3ab, 3ac, 3ad, 3ba, 3bb, 3ca, 3cb) is obtained if the processing means (8) can control the opening and/or closing of the corresponding control valves (4aa, 4ab, 4ba, 4bb, 4ca, 4cb) associated with said fluid outlets (3aa, 3ab, 3ac, 3ad, 3ba, 3bb, 3ca, 3cb).

In addition to the foregoing, the processing means (8) are configured to control in real time the opening of the corresponding control valves (4aa, 4ab, 4ba, 4bb, 4ca, 4cb) associated with the at least two fluid outlets (3aa, 3ab, 3ac, 3ad, 3ba, 3bb, 3ca, 3cb) associated with each culture medium (2a, 2b, 2c), said control being in response to the oxygen requirements of said culture medium (2a, 2b, 2c). Additionally, the processing means (8) are configured to control the opening of the corresponding control valves (4aa, 4ab, 4ba, 4bb, 4ca, 4cb) based on the at least one acquired water flow velocity and direction measurement.

In the context of the present invention, without limiting the scope thereof, it should be understood as processing means (8) to one or more processors configurable and interconnected with each other. In this regard, when more than one processor is provided as part of said processing means (8), without limiting the scope of the present invention, each of said processors may be configured to perform a part of an operation, the whole of an operation, a subset of operations or the whole of the operations for which said processing means (8) are configured. The position of said processing means (8) in the system (1) does not limit the scope of the present invention. When said processing means (8) comprise a plurality of processors interconnected with each other, said plurality of processors may be provided integrated in a single unit, distributed in different positions in the system, or remotely, without limiting the scope of the present invention.

The specific manner in which the configuration of the processing means (8) is obtained does not limit the scope of the present invention and any option known to a person ordinarily skilled in the art may be used.

In a preferred embodiment, the processing means (8) may be configured to predict or forecast the behavior of water currents in the water body from historical measurements of water currents. For this, the system (1) may comprise at least one storage memory (not illustrated in the figures) operatively connected operatively with the processing means (8) and configured to store the at least one water flow direction and velocity measurement received in said memory, said at least one stored measurement having an associated timestamp.

Additionally, the processing means (8) may be configured to access said stored measurement and to forecast a behavior of water currents in the water body based on said at least one stored measurement.

For this, in a preferred embodiment, the processing means (8) may be configured to obtain at least one water flow direction and/or velocity interpolation curve as a function of time based on the at least one stored measurement, preferably on a plurality of stored measurements. Said plurality may comprise all or a subset of the stored measurements. In a more preferred embodiment, and without limiting the scope of the present invention, the processing means (8) can obtain said interpolation curve from a number of last stored measurements. For example, and without limiting the scope of the present invention, the processing means (8) can obtain an interpolation curve from between 10 and 100 last stored measurements. The specific mode by which the processing means (8) obtain said interpolation curve does not limit the scope of the present invention and any method known in the prior art may be used. Additionally, without limiting the scope of the present invention, the temporal extent that the processing means (8) consider to obtain said interpolation curve does not limit the scope of the present invention. In an example embodiment, advantageously and without limiting the scope of the present invention, the temporal extent may be greater than or equal to one lunar cycle, typically between 28 and 30 days. Said preferred embodiment has the advantage that it allows obtaining an interpolation curve incorporating all the tidal variations in the body of water where the plurality of culture media is located, due to the lunar cycle.

Once the at least one velocity and/or current interpolation curve as a function of time has been obtained, the processing means (8) can extrapolate said at least one obtained curve to predict a water flow direction and/or velocity at a future time.

In another preferred embodiment, the system (1) may additionally comprise means for measuring at least one environmental variable operatively connected to the processing means (8). Said environmental variable may be, for example and without limiting the scope of the present invention, temperature, environmental humidity, wind direction and speed or amount of falling water. In this preferred embodiment, the processing means (8) may be configured to obtain and store at least one measurement of said at least one environmental variable, said at least one measurement of said at least one stored environmental variable having an associated timestamp. Additionally, the processing means (8) may be configured to predict a behavior of water currents in the water body based on said at least one measurement of stored water current direction and velocity and said at least one measurement of at least one stored environmental variable.

To this end, in a preferred embodiment, the processing means (8) may be configured to implement a machine learning model that relates a plurality of stored water current direction and velocity measurements to a plurality of measurements of the at least one stored environmental variable. Said plurality may comprise all or a subset of the stored measurements. Any machine learning model can be used to implement the machine learning model without limiting the scope of the present invention.

Once the machine learning model is obtained, the processing means (8) can use said model to predict a water flow direction and/or velocity at a future time.

In another preferred embodiment, without limiting the scope of the present invention, the processing means (8) can obtain or determine a hydrodynamic model of the water body and predict the direction and/or velocity of water currents in said water body by means of a fluid dynamic model, for example, using computational fluid dynamics (CFD).

In any of the previously described cases, the processing means (8) may be further configured to update said interpolation curve, said machine learning model, or said hydrodynamic model, from future measurements of water current direction and/or velocity, by comparing said measurements with forecasts and/or predictions made.

In a preferred embodiment, without limiting the scope of the present invention, the system (1) may additionally comprise at least one oxygen sensor (9a, 9b, 9c) operatively connected operatively with the processing means (8) and positioned within a second vicinity of the plurality of culture media (2a, 2b, 2c). The extent of said second vicinity does not limit the scope of the present invention and will depend on the extent of the culture media (2a, 2b, 2c), the extent of the body of water, or other operational aspects of the system (1) which is the subject of the present invention. In a preferred embodiment, without limiting the scope of the present invention, said second vicinity may be defined by a radius of 100 m, more preferably of 50 m and even more preferably of 10 m around the area occupied by the plurality of culture media (2a, 2b, 2c). However, in other preferred embodiments, the at least one oxygen sensor (9a, 9b, 9c) may be positioned between culture media (2a, 2b, 2c) neighboring or in proximity to one of said culture media (2a, 2b, 2c).

In the preferred embodiment in which the system (1) additionally comprises at least one oxygen sensor (9a, 9b, 9c), the processing means (8) may be additionally configured to receive at least one oxygen measurement from said at least one oxygen sensor (9a, 9b, 9c). Further, the processing means (8) may be configured to control the opening of the corresponding control valves (4aa, 4ab, 4ba, 4bb, 4ca, 4cb) based additionally on the at least one received oxygen measurement.

In another preferred embodiment, without limiting the scope of the present invention, the system (1) may comprise a plurality of oxygen sensors (9a, 9b, 9c), each configured to obtain at least one corresponding oxygen measurement in the body of water and to communicate said corresponding measurement to the processing means (8). The manner in which said plurality of oxygen sensors (9a, 9b, 9c) are distributed in the body of water does not limit the scope of the present invention. For example, as illustrated in Figures 1 and 2 and without limiting the scope of the present invention, an oxygen sensor (9a, 9b, 9c) can be provided associated with a corresponding culture medium (2a, 2b, 2c), such that the oxygen measurement performed by a particular oxygen sensor (e.g., oxygen sensor 9a) can be associated with the amount of oxygen present in its corresponding culture medium (in this case, culture medium 2a).

The present invention further provides an oxygenation method for an aquaculture system (1) comprising a plurality of culture media (2a, 2b, 2c) submerged in a body of water, which allows dynamic control of oxygen supply in response to oxygen requirements of said culture media (2a, 2b, 2c), using streams present in said body of water by means of a plurality of fluid outlets (3aa, 3ab, 3ac, 3ad, 3ba, 3bb, 3ca, 3cb), wherein the method comprises:
provide an oxygenation system (1) comprising:
a plurality of outlets (3aa, 3ab, 3ac, 3ad, 3ba, 3bb, 3ca, 3cb) of an oxygen-containing fluid, wherein each culture medium (2a, 2b, 2c) has associated with it at least two corresponding fluid outlets (3aa, 3ab, 3ac, 3ad, 3ba, 3bb, 3ca, 3cb), wherein each fluid outlet (3aa, 3ab, 3ac, 3ad, 3ba, 3bb, 3bb, 3ca, 3cb) of the plurality has associated with it a corresponding control valve (4aa, 4ab, 4ba, 4bb, 4ca, 4cb), which selectively controls the passage of fluid into the outlet (3aa, 3ab, 3ac, 3ad, 3ba, 3bb, 3ca, 3cb);
at least one fluid distribution line (5, 5a, 5aa, 5aa, 5ab, 5ac, 5ad, 5b, 5c) operatively connected to at least one of the fluid outlets (3aa, 3ab, 3ac, 3ad, 3ba, 3bb, 3ca, 3cb) of the plurality by means of its corresponding control valve (4aa, 4ab, 4ba, 4bb, 4ca, 4cb);
a fluid source (6) operatively connected with the at least one fluid distribution line (5, 5a, 5aa, 5ab, 5ac, 5ad, 5b, 5c);
at least one current meter (7) positioned within a vicinity of the plurality of culture media (2a, 2b, 2c); and
processing means (8) operatively connected operatively with the plurality of fluid outlets (3aa, 3ab, 3ac, 3ad, 3ba, 3bb, 3ca, 3cb),
wherein the method further comprises:
acquire, by means of the processing means (8), at least one measurement of velocity and direction of water flow in the water body;
control, by means of the processing means (8), the opening of the corresponding control valves (4aa, 4ab, 4ba, 4bb, 4ca, 4cb) associated with the at least two fluid outlets (3aa, 3ab, 3ac, 3ad, 3ba, 3bb, 3ca, 3cb) associated with each culture medium (2a, 2b, 2c), said control being in response to the oxygen requirements of said culture medium; (2a, 2b, 2c) and
control, by means of the processing means (8), the opening of the corresponding control valves (4aa, 4ab, 4ba, 4bb, 4ca, 4cb) based, additionally, on the at least one received water flow velocity and direction measurement,
where the step of controlling the opening of the corresponding control valves (4aa, 4ab, 4ba, 4bb, 4ca, 4cb) is performed in real time.

All of the previously described technical feature options of the system (1) which is the subject of the present invention can be applied, by means of their corresponding configurations, with respect to the method which is the subject of the present invention, without this limiting the scope of the present application.

In a preferred embodiment, when the system (1) comprises at least one current meter (7) operatively connected operatively with the processing means (8), the step of acquiring, by means of the processing means (8), at least one measurement of water current velocity and direction in the body of water may comprise:
obtaining said at least one measurement of said water current direction and velocity by means of said at least one current meter (7); and
receive, by means of the processing means (8), said at least one oxygen measurement from said at least one current meter (7)

In a more preferred embodiment, without limiting the scope of the present invention, the step of obtaining said at least one measurement of direction and velocity of said water current by means of said at least one current meter (7) may comprise, obtaining, by means of the at least one current meter (7), a plurality of measurements of direction and velocity of water currents, said plurality of measurements being obtained at a plurality of depths of said body of water.

In a preferred embodiment, without limiting the scope of the present invention, when the system (1) comprises at least one oxygen sensor (9a, 9b, 9c) operatively connected operatively with the processing means (8), the method may additionally comprise:
obtain at least one oxygen measurement by said at least one oxygen sensor (9a, 9b, 9c);
receive, by means of the processing means (8), at least one oxygen measurement from said at least one oxygen sensor (9a, 9b, 9c);
wherein the step of controlling, by means of the processing means (8), the opening of the corresponding control valves (4aa, 4ab, 4ba, 4bb, 4ca, 4cb) is additionally performed based on the at least one oxygen measurement received.

According to the previously detailed description it is possible to obtain an oxygenation system (1) and method for aquaculture that overcomes the deficiencies of the prior art.

In contrast to the prior art, the system (1) which is the subject of the present invention allows a dynamic control of oxygenation independently for each of the culture media (2a, 2b, 2c).

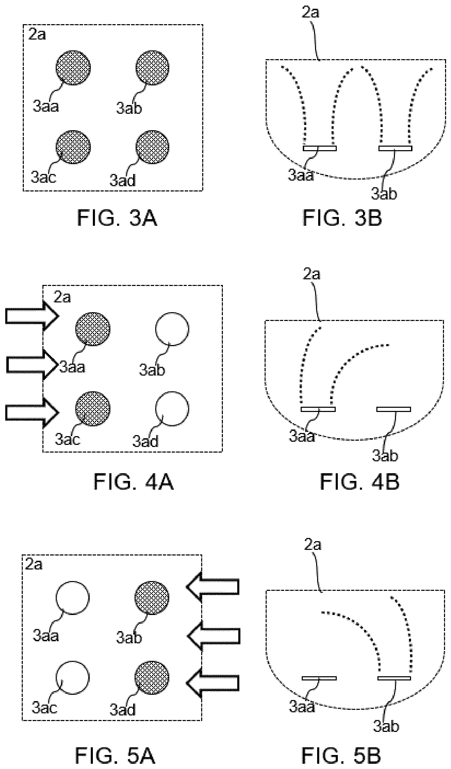

For example, as schematically illustrated in Figures 3A, 3B, 4A, 4B, 5A and 5B, the opening and closing of control valves (not illustrated in said figures) corresponding to fluid outlets (3aa, 3ab, 3ac, 3ad) associated with a particular culture medium (2a) may depend on the currents present in the body of water (illustrated by arrows in Figures 4A and 5A).

In the case of Figures 3A and 3B, there are no significant water currents in the water body. Thus, the processing means (not illustrated in said figures) allow the provision of the oxygen-containing fluid by means of the four fluid outlets (3aa, 3ab, 3ac, 3ad), as virtually all of the oxygen-containing fluid provided will be intended to satisfy the oxygen requirement of said particular culture medium (2a).

Figures 4A and 4B show significant water currents in the water body coming from the left side of the page. Thus, the processing means (not illustrated in said figures) allow the provision of the oxygen-containing fluid only through two fluid outlets (3aa, 3ac), as part of the oxygen-containing fluid is diverted due to currents present in the body of water. In this way, virtually all of the oxygen-containing fluid provided will go to satisfy the oxygen requirement of that particular culture medium (2a).

Figures 5A and 5B show significant water currents in the water body coming from the right side of the page. Thus, the processing means (not illustrated in said figures) allow the provision of the oxygen-containing fluid only through two fluid outlets (3ab, 3ad), as part of the oxygen-containing fluid is diverted due to currents present in the body of water. In this way, virtually all of the oxygen-containing fluid provided will go to satisfy the oxygen requirement of that particular culture medium (2a).

It is to be understood that the various previously described options for different technical features of the system (1) and/or the method of the present invention may be combined with each other, or with other options known to a person ordinarily skilled in the art, in any manner intended without limiting the scope of the present application.

Hereinafter, examples of embodiments of the present invention will be described. It should be understood that such examples are described in order to provide a better understanding of the present invention, but in no way limit the scope of protection sought. Additionally, details of technical features specified in different examples may be combined with each other, or with other previously described preferred embodiments, in any manner envisaged without limiting the scope of the present invention.

### EXAMPLES OF EMBODIMENT

### EXAMPLE 1: Implementation of the oxygenation system

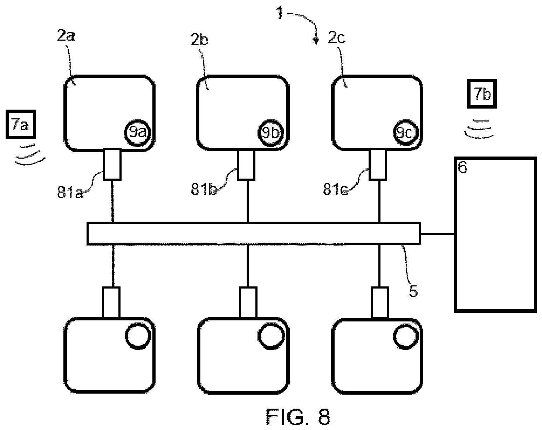

Figure 8 schematically illustrates a third embodiment of the system that is the subject of the present invention. In this realization example, the fluid source (6) corresponds to a pontoon including in-situ gaseous oxygen generators, installed between 50 and 200 meters from a group of cages (2a, 2b, 2c), also called cultivation module. The example configuration comprises as means of gaseous oxygen distribution, a main distribution line, which allows the flow of oxygen from the oxygen generator (6) to the cultivation module, where it connects operationally with a distribution ring (5) installed in the aisles of the cultivation module. Secondary distribution lines run from the distribution ring, which carry oxygen to each culture cage (2a, 2b, 2c). The main distribution line, the distribution ring (5) and the secondary distribution lines are manufactured using HDPE thermoplastic polymer pipes of such internal diameter as to generate resulting fluid velocities of no more than 2 m/s in all sections at maximum flow conditions.

In this example, the secondary distribution lines operatively connect to the culture cages (2a, 2b, 2c) via corresponding distribution boards (81a, 81b, 81c).

In the system of this example, both the dissolved oxygen sensors (9a, 9b, 9c) and the current meters (7a, 7b) are remotely connected to a PLC, which serves the function of processing means (8), located on the pontoon with the in-situ oxygen generators.

### Example 2: Distribution board

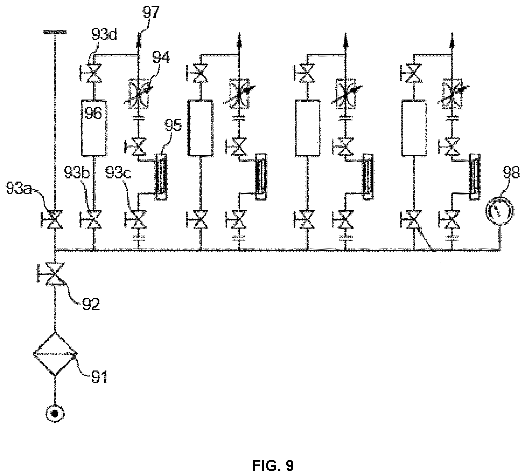

The distribution boards (81a, 81b, 81c) of the previous example are represented in the instrumentation diagram shown in Figure 9. In this example embodiment, the distribution board contains 4 proportional flow controllers as control means, each connected to an oxygen outlet (97).

As illustrated in Figure 9, the distribution boards (81a, 81b, 81c) further include for each of the 4 lines parallel to the flow controllers with mechanical flow regulation and measurement means, and shut-off valves for the maintenance of each line. Each distribution board also incorporates one or more pressure gauges (98) for measuring oxygen pressure and a filter (91) with water purge to remove any water that may be found in the lines during maintenance.

In the oxygenation system of the example, the fluid outlets (3a, 3b, 3c) of the distribution boards (81a, 81b, 81c) to the culture cage correspond to diffusers installed at a depth of between 10 and 12 meters, fed by rubber hoses each connected to one of the outlets (97) of the distribution board.

In the example shown in Figure 9, the numbers correspond to the following elements:
91: Filter with water purge
92, 93a, 93b, 93c, 93d: Ball valve
94: Shut-off valve
95: Rotameter
96: Automatic flow control
97: Pressure gauge.

### Example 3: Control diagram

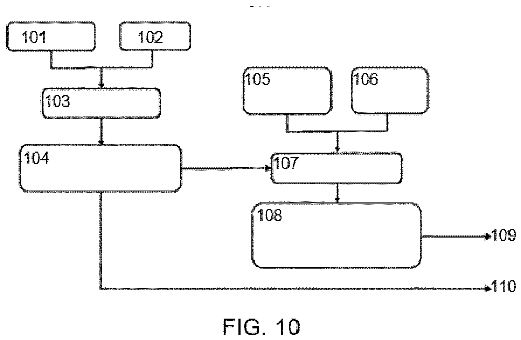

In the configuration of the above examples, the processing means (8) correspond to a PLC located on the pontoon where the oxygen generators are also located. The corresponding control diagram is illustrated in Figure 10. Such PLC combines two control algorithms (103, 107) to distribute oxygen to the culture cages (2a, 2b, 2c); primary control (103) and secondary control (107). The primary control (103) uses as main inputs the dissolved oxygen (DO, 101) measurements, in the form of concentration or saturation, coming from sensors (9a, 9b, 9c) installed between 6 and 8 meters depth in each culture cage, and the *Set Point* (102) linked to each sensor (9a, 9b, 9c), corresponding to an oxygen concentration or saturation value that the oxygenation system operator defines for each culture cage (2a, 2b, 2c) commanded by said sensor (9a, 9b 9c). The primary control (103) defines the oxygen requirement (104) for the culture cages (2a, 2b, 2c), as the amount of oxygen to be supplied per unit time.

The secondary control (107), on the other hand, uses as main inputs the oxygen requirement (104) per cage obtained from the primary control (103), and current velocity (105) and direction (106) measurements at 3 or 4 depths within the water body, obtained by 2 Doppler-type current meters (7a, 7b) installed about 20 meters away from each head or end of the culture module. The secondary control (107) defines the distribution of the oxygen requirement (108) of each cage in each oxygen outlet or diffuser located in the cages. In particular, it will prioritize the supply of oxygen by the diffuser(s) in such a way that the deviation or drift of the oxygen plume in the water column inside the cage due to the current is oriented towards the center of the cage and not towards the outside, thus increasing the residence time of the oxygen in the culture medium and subsequently the efficiency of the oxygenation system.

Therefore, according to the primary control, a standard automatic oxygenation would be obtained (110), mediated only by the oxygen requirement, while the secondary control allows an automatic oxygenation with control by currents (109), thus improving the efficiency of the oxygenation process.

## Claims

1. An oxygenation system (1) for aquaculture comprising a plurality of culture media (2a, 2b, 2c) submerged in a body of water, which allows dynamic control of oxygen supply in response to oxygen requirements of said culture media (2a, 2b, 2c), using currents present in said body of water by means of a plurality of fluid outlets (3aa, 3ab, 3ac, 3ad, 3ba, 3bb, 3ca, 3cb), **CHARACTERIZED in that** the system (1) comprises:
a plurality of outlets (3aa, 3ab, 3ac, 3ad, 3ba, 3bb, 3ca, 3cb) of an oxygen-containing fluid, wherein each culture medium (2a, 2b, 2c) has associated with it at least two corresponding fluid outlets (3aa, 3ab, 3ac, 3ad, 3ba, 3bb, 3ca, 3cb), wherein each fluid outlet (3aa, 3ab, 3ac, 3ad, 3ba, 3bb, 3ca, 3cb) of the plurality has associated with it a corresponding control valve (4aa, 4ab, 4ba, 4bb, 4ca, 4cb), which selectively controls the passage of fluid to the fluid outlet (3aa, 3ab, 3ac, 3ad, 3ba, 3bb, 3ca, 3ca, 3cb);
at least one fluid distribution line (5, 5a, 5aa, 5aa, 5ab, 5ac, 5ad, 5b, 5c) operatively connected to at least one of the fluid outlets (3aa, 3ab, 3ac, 3ad, 3ba, 3bb, 3ca, 3cb) of the plurality by means of its corresponding control valve (4aa, 4ab, 4ba, 4bb, 4ca, 4cb);
a fluid source (6) operatively connected to the at least one fluid distribution line (5, 5a, 5aa, 5ab, 5ac, 5ad, 5b, 5c); and
processing means (8) operatively connected operatively with the plurality of fluid outlets (3aa, 3ab, 3ac, 3ad, 3ba, 3bb, 3ca, 3cb), wherein the processing means (8) are configured to:
a) acquire at least one measurement of water velocity and current direction in the water body; and
b) controlling the opening of the corresponding control valves (4aa, 4ab, 4ba, 4bb, 4ca, 4cb) associated with the at least two fluid outlets (3aa, 3ab, 3ac, 3ad, 3ba, 3bb, 3ca, 3cb) associated with each culture medium (2a, 2b, 2c), said control being made in response to the oxygen requirements of said culture medium (2a, 2b, 2c);
wherein the processing means (8) is configured to control the opening of the corresponding control valves (4aa, 4ab, 4ba, 4bb, 4ca, 4cb) based, additionally, on the at least one acquired water flow velocity and direction measurement; and
wherein the processing means (8) are configured to control the opening of the corresponding control valves (4aa, 4ab, 4ba, 4bb, 4ca, 4cb) in real time.

2. The system (1) of claim 1, **CHARACTERIZED in that** it comprises at least one current meter (7) operatively connected operatively with the processing means (8) and positioned within a vicinity of the plurality of culture media (2a, 2b, 2c), wherein the processing means (8) are further configured to receive the at least one water current direction and velocity measurement from said at least one current meter (7).

3. The system (1) of claim 2, **CHARACTERIZED in that** the at least one current meter (7) is configured to obtain a plurality of measurements of direction and velocity of water currents, said plurality of measurements being obtained at a plurality of depths of said body of water.

4. The system (1) of claim 1, **CHARACTERIZED in that** it comprises at least one oxygen sensor (9a, 9b, 9c) operatively connected operatively with the processing means (8) and positioned within a second vicinity of the plurality of culture media (2a, 2b, 2c), wherein the processing means (8) are further configured to receive at least one oxygen measurement from said at least one oxygen sensor (9a, 9b, 9c); and wherein the processing means (8) are configured to control the opening of the corresponding control valves (4aa, 4ab, 4ba, 4bb, 4ca, 4cb) based additionally on the at least one oxygen measurement received.

5. The system (1) of claim 1, **CHARACTERIZED in that** each of said fluid outlets (3aa, 3ab, 3ac, 3ad, 3ba, 3bb, 3ca, 3cb) is selected from the group consisting of diffusers, eductors, injectors, sprinklers, as well as a combination thereof.

6. The system (1) of claim 1, **CHARACTERIZED in that** each control valve (4aa, 4ab, 4ba, 4bb, 4ca, 4cb) is selected from the group consisting of proportional valves, regulating valves, on/off valves, as well as a combination thereof.

7. The system (1) of claim 1, **CHARACTERIZED in that** each culture media (2a, 2b, 2c) has associated between 2 and 6 corresponding fluid outlets (3aa, 3ab, 3ac, 3ad, 3ba, 3bb, 3ca, 3cb).

8. The system (1) of claim 1, **CHARACTERIZED in that** it comprises a main distribution line (5) of fluid operatively connected to each fluid outlet (3aa, 3ab, 3ac, 3ad, 3ba, 3bb, 3ca, 3cb), wherein the main distribution line (5) has a ring arrangement.

9. The system (1) of claim 1, **CHARACTERIZED in that** it comprises a plurality of distribution lines (5a, 5b, 5c), each distribution line (5a, 5b, 5c) of the plurality associated with a corresponding culture medium (2a, 2b, 2c) and operatively connected with the at least two fluid outlets (3aa, 3ab, 3ac, 3ad, 3ba, 3bb, 3ca, 3cb) associated with the corresponding culture medium (2a, 2b, 2c).

10. The system (1) of claim 1, **CHARACTERIZED in that** each culture medium (2a, 2b, 2c) is selected from the group consisting of cages, hangers and lanterns, as well as a combination thereof.

11. The system (1) of claim 1, **CHARACTERIZED in that** the oxygen-containing fluid is selected from the group consisting of gaseous oxygen, air, oxygen-enriched water, air-enriched water, as well as a combination thereof.

12. The system (1) of claim 1, **CHARACTERIZED in that** the processing means (8) are further configured to obtain a water current direction and velocity interpolation curve as a function of time based on a plurality of stored water current velocity and direction measurements in the water body.

13. An oxygenation method for an aquaculture system (1) comprising a plurality of culture media (2a, 2b, 2c) submerged in a body of water, which allows dynamic control of oxygen supply in response to oxygen requirements of said culture media (2a, 2b, 2c), using currents present in said body of water by means of a plurality of fluid outlets (3aa, 3ab, 3ac, 3ad, 3ba, 3bb, 3ca, 3cb), **CHARACTERIZED in that** the method comprises:
provide an oxygenation system (1) comprising:
a plurality of outlets (3aa, 3ab, 3ac, 3ad, 3ba, 3bb, 3ca, 3cb) of an oxygen-containing fluid, wherein each culture medium (2a, 2b, 2c) has associated with it at least two corresponding fluid outlets (3aa, 3ab, 3ac, 3ad, 3ba, 3bb, 3ca, 3cb), wherein each fluid outlet (3aa, 3ab, 3ac, 3ad, 3ba, 3bb, 3bb, 3ca, 3cb) of the plurality has associated with it a corresponding control valve (4aa, 4ab, 4ba, 4bb, 4ca, 4cb), which selectively controls the passage of fluid into the outlet (3aa, 3ab, 3ac, 3ad, 3ba, 3bb, 3ca, 3cb);
at least one fluid distribution line (5, 5a, 5aa, 5aa, 5ab, 5ac, 5ad, 5b, 5c) operatively connected to at least one of the fluid outlets (3aa, 3ab, 3ac, 3ad, 3ba, 3bb, 3ca, 3cb) of the plurality by means of its corresponding control valve (4aa, 4ab, 4ba, 4bb, 4ca, 4cb);
a fluid source (6) operatively connected to the at least one fluid distribution line (5, 5a, 5aa, 5ab, 5ac, 5ad, 5b, 5c); and
processing means (8) operatively connected operatively with the plurality of fluid outlets (3aa, 3ab, 3ac, 3ad, 3ba, 3bb, 3ca, 3cb),
wherein the method further comprises:
acquiring at least one measurement of velocity and direction of water current in the water body by means of the processing means (8);
control, by means of the processing means (8), the opening of the corresponding control valves (4aa, 4ab, 4ba, 4bb, 4ca, 4cb) associated with the at least two fluid outlets (3aa, 3ab, 3ac, 3ad, 3ba, 3bb, 3ca, 3cb) associated with each culture medium (2a, 2b, 2c), said control being in response to the oxygen requirements of said culture medium; (2a, 2b, 2c) and
control, by means of the processing means (8), the opening of the corresponding control valves (4aa, 4ab, 4ba, 4bb, 4ca, 4cb) based, additionally, on the at least one acquired water flow velocity and direction measurement;
where the step of controlling the opening of the corresponding control valves (4aa, 4ab, 4ba, 4bb, 4ca, 4cb) is performed in real time.

14. The method of claim 13, **CHARACTERIZED in that** the system (1) additionally comprises at least one current meter (7) operatively connected operatively with the processing means (8) and positioned within a vicinity of the plurality of culture media (2a, 2b, 2c) and because the step of acquiring at least one measurement of water current velocity and direction in the body of water comprises:
obtaining said at least one measurement of water current direction and velocity by means of said at least one current meter (7); and
receive, by means of the processing means (8), said at least one water current direction and velocity measurement from said at least one current meter (7).

15. The method of claim 14, **CHARACTERIZED in that** obtaining said at least one water current direction and velocity measurement comprises obtaining, by means of the at least one current meter (7), a plurality of water current direction and velocity measurements, said plurality of measurements being obtained at a plurality of depths of said body of water.

16. The method of claim 13, **CHARACTERIZED in that** the system (1) additionally comprises at least one oxygen sensor (9a, 9b, 9c) operatively connected operatively with the processing means (8) and positioned within a second vicinity of the plurality of culture media (2a, 2b, 2c) and because the method additionally comprises:
obtain at least one oxygen measurement by said at least one oxygen sensor (9a, 9b, 9c);
receive, by means of the processing means (8), at least one oxygen measurement from said at least one oxygen sensor (9a, 9b, 9c);
wherein the step of controlling, by means of the processing means (8), the opening of the corresponding control valves (4aa, 4ab, 4ba, 4bb, 4ca, 4cb) is additionally performed based on the at least one oxygen measurement received.

## Amended claims

### Amended claims under Art. 19.1 PCT

1. An oxygenation system (1) for aquaculture comprising a plurality of culture cages (2a, 2b, 2c) submerged in a body of water, which allows dynamic control of oxygen supply in response to oxygen requirements of said culture cages (2a, 2b, 2c), using currents present in said body of water by means of a plurality of fluid outlets (3aa, 3ab, 3ac, 3ad, 3ba, 3bb, 3ca, 3cb), **CHARACTERIZED in that** the system (1) comprises:
a plurality of outlets (3aa, 3ab, 3ac, 3ad, 3ba, 3bb, 3ca, 3cb) of an oxygen-containing fluid, wherein each culture cage (2a, 2b, 2c) has associated at least two corresponding fluid outlets (3aa, 3ab, 3ac, 3ad, 3ba, 3bb, 3ca, 3cb) positioned in said culture cage (2a, 2b, 2c), wherein each fluid outlet (3aa, 3ab, 3ac, 3ad, 3ba, 3bb, 3bb, 3ca, 3cb) of the plurality has associated with it a corresponding control valve (4aa, 4ab, 4ba, 4bb, 4ca, 4cb), which selectively controls the passage of fluid into the fluid outlet (3aa, 3ab, 3ac, 3ad, 3ba, 3bb, 3ca, 3cb);
at least one fluid distribution line (5, 5a, 5aa, 5aa, 5ab, 5ac, 5ad, 5b, 5c) operatively connected to at least one of the fluid outlets (3aa, 3ab, 3ac, 3ad, 3ba, 3bb, 3ca, 3cb) of the plurality by means of its corresponding control valve (4aa, 4ab, 4ba, 4bb, 4ca, 4cb);
a fluid source (6) operatively connected to the at least one fluid distribution line (5, 5a, 5aa, 5ab, 5ac, 5ad, 5b, 5c); and
processing means (8) operatively connected operatively with the plurality of fluid outlets (3aa, 3ab, 3ac, 3ad, 3ba, 3bb, 3ca, 3cb), wherein the processing means (8) are configured to:
a) acquiring at least one measurement of water velocity and current direction in the water body; and
b) control the opening of the corresponding control valves (4aa, 4ab, 4ba, 4bb, 4ca, 4cb) associated with the at least two fluid outlets (3aa, 3ab, 3ac, 3ad, 3ba, 3bb, 3ca, 3cb) positioned in each culture cage (2a, 2b, 2c), said control being made in response to the oxygen requirements of said culture cage (2a, 2b, 2c);
wherein the processing means (8) are configured to control the opening of the corresponding control valves (4aa, 4ab, 4ba, 4bb, 4ca, 4cb) based, additionally, on the at least one acquired water flow velocity and direction measurement; and
wherein the processing means (8) are configured to control the opening of the corresponding control valves (4aa, 4ab, 4ba, 4bb, 4ca, 4cb) in real time.

2. The system (1) of claim 1, **CHARACTERIZED in that** it comprises at least one current meter (7) operatively connected operatively with the processing means (8) and positioned within a vicinity of the plurality of culture cages (2a, 2b, 2c), wherein the processing means (8) are further configured to receive the at least one water current direction and velocity measurement from said at least one current meter (7).

3. The system (1) of claim 2, **CHARACTERIZED in that** the at least one current meter (7) is configured to obtain a plurality of measurements of direction and velocity of water currents, said plurality of measurements being obtained at a plurality of depths of said body of water.

4. The system (1) of claim 1, **CHARACTERIZED in that** it comprises at least one oxygen sensor (9a, 9b, 9c) operatively connected operatively with the processing means (8) and positioned within a second vicinity of the plurality of culture cages (2a, 2b, 2c), wherein the processing means (8) are further configured to receive at least one oxygen measurement from said at least one oxygen sensor (9a, 9b, 9c); and wherein the processing means (8) are configured to control the opening of the corresponding control valves (4aa, 4ab, 4ba, 4bb, 4ca, 4cb) based additionally on the at least one oxygen measurement received.

5. The system (1) of claim 1, **CHARACTERIZED in that** each control valve (4aa, 4ab, 4ba, 4bb, 4ca, 4cb) is selected from the group consisting of proportional valves, regulating valves, on/off valves, as well as a combination thereof.

6. The system (1) of claim 1, **CHARACTERIZED in that** each culture cage (2a, 2b, 2c) has associated between 2 and 6 corresponding fluid outlets (3aa, 3ab, 3ac, 3ad, 3ba, 3bb, 3ca, 3cb) positioned in said culture cage (2a, 2b, 2c).

7. The system (1) of claim 1, **CHARACTERIZED in that** it comprises a main distribution line (5) of fluid operatively connected to each fluid outlet (3aa, 3ab, 3ac, 3ad, 3ba, 3bb, 3ca, 3cb), wherein the main distribution line (5) has a ring arrangement.

8. The system (1) of claim 1, **CHARACTERIZED in that** it comprises a plurality of distribution lines (5a, 5b, 5c), each distribution line (5a, 5b, 5c) of the plurality associated with a corresponding culture cage (2a, 2b, 2c) and operatively connected with the at least two fluid outlets (3aa, 3ab, 3ac, 3ad, 3ba, 3bb, 3ca, 3cb) associated with the corresponding culture cage (2a, 2b, 2c).

9. The system (1) of claim 1, **CHARACTERIZED in that** the oxygen-containing fluid is selected from the group consisting of gaseous oxygen, air, oxygen-enriched water, air-enriched water, as well as a combination thereof.

10. The system (1) of claim 1, **CHARACTERIZED in that** the processing means (8) are further configured to obtain a water current direction and velocity interpolation curve as a function of time based on a plurality of stored water current velocity and direction measurements in the water body.

11. An oxygenation method for an aquaculture system (1) comprising a plurality of culture cages (2a, 2b, 2c) submerged in a body of water, which allows dynamic control of oxygen supply in response to oxygen requirements of said culture cages (2a, 2b, 2c), using currents present in said body of water by means of a plurality of fluid outlets (3aa, 3ab, 3ac, 3ad, 3ba, 3bb, 3ca, 3cb), **CHARACTERIZED in that** the method comprises:
provide an oxygenation system (1) comprising:
a plurality of outlets (3aa, 3ab, 3ac, 3ad, 3ba, 3bb, 3ca, 3cb) of an oxygen-containing fluid, wherein each culture cage (2a, 2b, 2c) has associated at least two corresponding fluid outlets (3aa, 3ab, 3ac, 3ad, 3ba, 3bb, 3ca, 3cb) positioned in said culture cage (2a, 2b, 2c), wherein each fluid outlet (3aa, 3ab, 3ac, 3ad, 3ba, 3bb, 3bb, 3ca, 3cb) of the plurality has associated with it a corresponding control valve (4aa, 4ab, 4ba, 4bb, 4ca, 4cb), which selectively controls the passage of fluid into the fluid outlet (3aa, 3ab, 3ac, 3ad, 3ba, 3bb, 3ca, 3cb);
at least one fluid distribution line (5, 5a, 5aa, 5aa, 5ab, 5ac, 5ad, 5b, 5c) operatively connected to at least one of the fluid outlets (3aa, 3ab, 3ac, 3ad, 3ba, 3bb, 3ca, 3cb) of the plurality by means of its corresponding control valve (4aa, 4ab, 4ba, 4bb, 4ca, 4cb);
a fluid source (6) operatively connected to the at least one fluid distribution line (5, 5a, 5aa, 5ab, 5ac, 5ad, 5b, 5c); and
processing means (8) operatively connected operatively with the plurality of fluid outlets (3aa, 3ab, 3ac, 3ad, 3ba, 3bb, 3ca, 3cb),
wherein the method further comprises:
acquiring at least one measurement of velocity and direction of water current in the water body by means of the processing means (8);
control, by means of the processing means (8), the opening of the corresponding control valves (4aa, 4ab, 4ba, 4bb, 4ca, 4cb) associated with the at least two fluid outlets (3aa, 3ab, 3ac, 3ad, 3ba, 3bb, 3ca, 3cb) positioned in each culture cage (2a, 2b, 2c), said control being in response to the oxygen requirements of said culture cage; (2a, 2b, 2c) and
control, by means of the processing means (8), the opening of the corresponding control valves (4aa, 4ab, 4ba, 4bb, 4ca, 4cb) based, additionally, on the at least one acquired water flow velocity and direction measurement;
where the step of controlling the opening of the corresponding control valves (4aa, 4ab, 4ba, 4bb, 4ca, 4cb) is performed in real time.

12. The method of claim 11, **CHARACTERIZED in that** the system (1) additionally comprises at least one current meter (7) operatively connected operatively with the processing means (8) and positioned within a vicinity of the plurality of culture cages (2a, 2b, 2c) and because the step of acquiring at least one measurement of water current velocity and direction in the body of water comprises:
obtaining said at least one measurement of water current direction and velocity by means of said at least one current meter (7); and
receive, by means of the processing means (8), said at least one water current direction and velocity measurement from said at least one current meter (7).

13. The method of claim 12, **CHARACTERIZED in that** obtaining said at least one water current direction and velocity measurement comprises obtaining, by means of the at least one current meter (7), a plurality of water current direction and velocity measurements, said plurality of measurements being obtained at a plurality of depths of said body of water.

14. The method of claim 11, **CHARACTERIZED in that** the system (1) additionally comprises at least one oxygen sensor (9a, 9b, 9c) operatively connected operatively with the processing means (8) and positioned within a second vicinity of the plurality of culture cages (2a, 2b, 2c) and because the method additionally comprises:
obtain at least one oxygen measurement by said at least one oxygen sensor (9a, 9b, 9c);
receive, by means of the processing means (8), at least one oxygen measurement from said at least one oxygen sensor (9a, 9b, 9c);
wherein the step of controlling, by means of the processing means (8), the opening of the corresponding control valves (4aa, 4ab, 4ba, 4bb, 4ca, 4cb) is additionally performed based on the at least one oxygen measurement received.
